# EUROPEAN PATENT APPLICATION

(11) **EP 4 760 089 A1**
(43) Date of publication of application: **17.06.2026**
(21) Application number: 24902108.0
(22) Date of filing: 24.07.2024
(51) Int. Cl.: F03D 1/06

(54) **WIND TURBINE BLADE AIRFOIL FAMILY**

(30) Priority: 15.12.2023 CN 202311733041
(71) Applicant: Sinoma Wind Power Blade Co., Ltd., Beijing 100083 (CN)
(72) Inventor: LI, Xingxing, Beijing 100192 (CN); LU, Xiaofeng, Beijing 100192 (CN); LI, Chengliang, Beijing 100192 (CN); XIE, Zhe, Beijing 100192 (CN); REN, Wang, Beijing 100192 (CN); MAO, Xiaoe, Beijing 100192 (CN)
(74) Representative: Cohausz & Florack
(86) International application number: PCT/CN2024/107202
(87) International publication number: WO 2025/123682

(57) **Abstract**

A wind turbine blade airfoil family, comprising a first airfoil family, a second airfoil family, and a third airfoil family, each of which comprises a plurality of airfoils. Each airfoil in the first airfoil family has a first relative thickness d1, having the range of 17.1% ≤ d1 ≤ 26.3%; each airfoil in the second airfoil family has a second relative thickness d2, having the range of 28.5% ≤ d2 ≤ 36.8%; each airfoil in the third airfoil family has a third relative thickness d3, having the range of 37.9% ≤ d2 ≤ 63.0%; the range of the ratio of the distance from the maximum thickness position of each airfoil to the front edge to the chord length is 26.5%-35.0%. The airfoil family can improve the efficiency-load characteristics of blades, increase the stall margin of blades, the roughness sensitivity of the power generation performance, etc., and is conducive to the low-cost and lightweight design of blades.

## Description

### CROSS-REFERENCE TO RELATED APPLICATIONS

This application claims priority to Chinese Patent Application No. 202311733041.7, titled "WIND TURBINE BLADE AIRFOIL FAMILY" and filed on December 15, 2023, which is hereby incorporated by reference in its entirety.

### TECHNICAL FIELD

The present application belongs to the technical field of wind power generation, and in particular relates to a wind turbine blade airfoil family.

### BACKGROUND

With the development of large-scale wind turbine blades and the development of wind resources under complex and diverse terrain, the design and manufacture of large wind turbine blades face many contradictory requirements, including high aerodynamic efficiency, low load, aerodynamic adaptability in complex environments, aeroelastic stability, high structural stiffness, low material cost, easy production and maintenance, etc. At present, the general airfoils used in blade design lack airfoils with excellent comprehensive performance, especially high-performance thick airfoils and high-lift thick airfoils, therefore, it is difficult to adapt to the requirements of low-cost and lightweight blade development.

### SUMMARY

The present application provides a wind turbine blade airfoil family, which can improve airfoil performance, including core aerodynamic structural properties such as design lift characteristics, lift-to-drag ratio characteristics, critical stall characteristics, leading edge roughness sensitivity, and section moment of inertia, fundamentally improve the efficiency-load characteristics of the blade, improve the stall margin of the blade, the roughness sensitivity of the power generation performance, etc., and facilitate the low-cost and lightweight design of the blade.

The present application provides a wind turbine blade airfoil family, comprising a first airfoil family, a second airfoil family and a third airfoil family, the first airfoil family, the second airfoil family and the third airfoil family each comprise a plurality of airfoils, each of the airfoils comprises a leading edge, an upper surface, a trailing edge and a lower surface connected with one another in sequence, a connecting line from the leading edge to the trailing edge is a chord line, a ratio of a maximum thickness between the upper surface and the lower surface to a length of the chord line is a relative thickness, and each of the airfoils in the first airfoil family has a first relative thickness d1, the first relative thickness d1 has a following range: 17.1% ≤d1≤26.3%; each of the airfoils in the second airfoil family has a second relative thickness d2, the second relative thickness d2 has a following range: 28.5%≤d2≤ 36.8%; each of the airfoils in the third airfoil family has a third relative thickness d3, the third relative thickness d3 having a following range: 37.9%≤d2≤63.0%; a ratio of a distance from a maximum thickness position of each of the airfoils to the leading edge to the length of the chord line ranges from 26.5% to 35.0%.

According to the above wind turbine blade airfoil family, in the first airfoil family, the ratio of the distance from the maximum thickness position of each of the airfoils to the leading edge to the length of the chord line ranges from 27.1% to 34.4%; in the second airfoil family, the ratio of the distance from the maximum thickness position of each of the airfoils to the leading edge to the length of the chord line ranges from 26.5% to 29.9%; in the third airfoil family, the ratio of the distance from the maximum thickness position of each of the airfoils to the leading edge to the length of the chord line ranges from 26.7% to 35.0%.

According to the above wind turbine blade airfoil family, each of the airfoils has a maximum curvature, and a ratio of the maximum curvature of each of the airfoils to the length of the chord line ranges from 1.83% to 4.57%.

According to the above wind turbine blade airfoil family, in the first airfoil family, the ratio of the maximum curvature of each of the airfoils to the length of the chord line ranges from 3.47% to 4.57%; in the second airfoil family, the ratio of the maximum curvature of each of the airfoils to the length of the chord line ranges from 2.44% to 3.07%; and in the third airfoil family, the ratio of the maximum curvature of each of the airfoils to the length of the chord line ranges from 1.83% to 2.67%.

According to the above wind turbine blade airfoil family, a ratio of a distance from a maximum curvature position of each of the airfoils to the leading edge to the length of the chord line ranges from 42.9% to 84.5%.

According to the above wind turbine blade airfoil family, in the first airfoil family, the ratio of the distance from the maximum curvature position of each of the airfoils to the leading edge to the length of the chord line ranges from 42.9% to 78.4%; in the second airfoil family, the ratio of the distance from the maximum curvature position of each of the airfoils to the leading edge to the length of the chord line ranges from 74.2% to 82.8%; in the third airfoil family, the ratio of the distance from the maximum curvature position of each of the airfoils to the leading edge to the length of the chord line ranges from 75.1% to 84.5%.

According to the above wind turbine blade airfoil family, a ratio of a radius of the leading edge to the length of the chord line ranges from 1.7% to 26.7%.

According to the above wind turbine blade airfoil family, in the first airfoil family, the ratio of the radius of the leading edge of each of the airfoils to the length of the chord line ranges from 1.7% to 3.6%; in the second airfoil family, the ratio of the radius of the leading edge of each of the airfoils to the length of the chord line ranges from 6.7% to 8.9%; in the third airfoil family, the ratio of the radius of the leading edge of each of the airfoils to the length of the chord line ranges from 20.6% to 26.7%.

According to the above wind turbine blade airfoil family, a ratio of a thickness of the trailing edge to the length of the chord line ranges from 0.34% to 42.9%.

According to the above wind turbine blade airfoil family, in the first airfoil family, the ratio of the thickness of the trailing edge of each of the airfoils to the length of the chord line ranges from 0.34% to 0.42%; in the second airfoil family, the ratio of the thickness of the trailing edge of each of the airfoils to the length of the chord line ranges from 0.48% to 1.68%; and in the third airfoil family, the ratio of the thickness of the trailing edge of each of the airfoils to the length of the chord line ranges from 17.91% to 42.9%.

The wind turbine blade airfoil family of the present application includes a first airfoil family, a second airfoil family and a third airfoil family. The three airfoil families are applicable to different parts of the blade respectively. The three airfoil families each include multiple airfoils. The first relative thickness d1 of each airfoil in the first airfoil family has a range of 17.1%≤d1≤26.3%, which is applicable to the outer area of the blade. The second relative thickness d2 of each airfoil in the second airfoil family has a range of 28.5%≤d2≤ 36.8%, which is applicable to the middle part of the blade. The third relative thickness d3 of each airfoil in the third airfoil family has a range of 37.9% ≤d3 ≤63.0%, which is applicable to the inner area of the blade. The ratio of the distance from the maximum thickness position of each airfoil to the leading edge to the length of the chord line ranges from 26.5% to 35.0%. Within this range, the maximum thickness positions each are close to the aerodynamic center. The three airfoil families of the wind turbine blade airfoil family of the present application improve the core characteristic parameters of the aerodynamic-structure aspects of the airfoil including design lift characteristics, lift-to-drag ratio characteristics, critical stall characteristics, leading edge roughness sensitivity, geometric area, section moment of inertia, etc. by adjusting the geometric shape characteristics of the airfoil, such as relative thickness and maximum thickness position, relative curvature and maximum curvature position, leading edge radius, trailing edge thickness, etc., thereby achieving high performance, low cost, high aerodynamic adaptability and lightweight and other blade development requirements.

### BRIEF DESCRIPTION OF THE DRAWINGS

In order to more clearly illustrate the technical solution of the embodiments of the present application, the drawings required for use in the embodiments of the present application are introduced briefly below. For those skilled in the art, other drawings can be obtained based on these drawings without creative work.
FIG. 1 is a schematic structural diagram of a blade provided in an embodiment of the present application;
FIG. 2 is a schematic diagram of geometric profiles of three outer thin airfoils of a first airfoil family provided in an embodiment of the present application;
FIG. 3 is a schematic diagram of geometric profiles of two blade middle thick airfoils of a second airfoil family provided in an embodiment of the present application;
FIG. 4 is a schematic diagram of geometric profiles of three blade root large thickness airfoils of a third airfoil family provided in an embodiment of the present application;
FIG. 5 is a schematic diagram of a maximum thickness position comparison between a new airfoil and a reference airfoil provided in an embodiment of the present application;
FIG. 6 is a schematic diagram of an aerodynamic efficiency-load characteristic curve comparison of outer thin airfoils of the first airfoil family provided in an embodiment of the present application;
FIG. 7 is a schematic diagram of an aerodynamic efficiency-load characteristic curve comparison of blade middle thick airfoils of the second airfoil family provided in an embodiment of the present application;
FIG. 8 is a schematic diagram of an aerodynamic efficiency-load characteristic curve comparison of blade root large thickness airfoils of the third airfoil family provided in an embodiment of the present application; and
FIG. 9 is a schematic diagram of an application layout scheme of an exemplary new airfoil family provided in an embodiment of the present application.

### Reference numerals:

10, leading edge; 20, upper surface; 30, trailing edge; 40, lower surface; 50, chord line; 60, mid-arc line.

### DETAILED DESCRIPTION

The features and exemplary embodiments of various aspects of the present application will be described in detail below. In order to make the purpose, technical solutions and advantages of the present application clearer, the present application will be further described in detail below in conjunction with the drawings and specific embodiments. It should be understood that the specific embodiments described herein are intended only to explain the present application, rather than to limit the present application. For those skilled in the art, the present application can be implemented without the need for some of these specific details. The following description of the embodiments is only to provide a better understanding of the present application by showing examples of the present application.

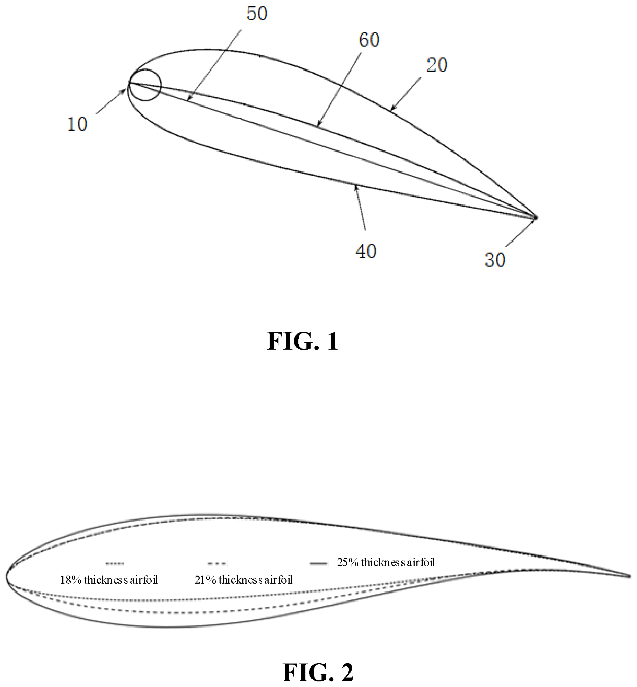

As shown in FIG. 1, the geometric characteristic parameters of the airfoil are defined as follows:

The mid-arc line 60 is used to represent the curve formed by the midpoints of the ordinates of the upper surface 20 and the lower surface 40 of the airfoil under the same abscissa.

The leading edge 10 and the leading edge radius are used to represent the frontmost point of the mid-arc line 60 of the airfoil as the leading edge 10 of the airfoil, and the radius of the inscribed circle at the leading edge 10 is called the leading edge radius.

The trailing edge 30 and the trailing edge thickness are used to represent the rearmost point of the mid-arc line 60 of the airfoil as the trailing edge 30, and the distance between the upper surface 20 and the lower surface 40 of the airfoil at the trailing edge 30 is called the trailing edge thickness.

The chord line 50 and the chord length are used to indicate that the connection line between the leading edge 10 and the trailing edge 30 of the airfoil is called the chord line 50 of the airfoil, and the length of the chord line 50 is called the chord length of the airfoil.

The curvature is used to indicate that the maximum vertical distance from the mid-arc line 60 to the chord line 50 is called the curvature of the airfoil, and the ratio of the curvature to the chord length is called the relative curvature.

The thickness is used to indicate that the distance between the upper surface 20 and the lower surface 40 in the direction perpendicular to the chord line 50 is called the thickness of the airfoil. Conventionally, the relative thickness of the airfoil refers to the ratio of the maximum thickness of the entire airfoil to the chord length.

It should be noted that the chord length in the embodiments of the present application is the reference line of the airfoil, and the geometric characteristic parameter values of the airfoil are all relative values obtained with reference to the chord length of the airfoil. That is to say, in the coordinate system of the airfoil, the length of the chord length is unit 1, the front end of the airfoil close to the leading edge 10 is the coordinate origin, the horizontal coordinate at the rear end of the trailing edge 30 is 1, and the vertical coordinate is symmetrical with respect to the horizontal axis. Therefore, the maximum thickness position of the airfoil refers to the abscissa of the maximum thickness position of the airfoil in the airfoil coordinate system, and the maximum curvature position of the airfoil refers to the abscissa of the maximum curvature position in the airfoil coordinate system.

As shown in FIGs. 1 to 9, the embodiments of the present application provide a wind turbine blade airfoil family, including a first airfoil family, a second airfoil family, and a third airfoil family. The first airfoil family, the second airfoil family, and the third airfoil family each include a plurality of airfoils, each airfoil includes a leading edge 10, an upper surface 20, a trailing edge 30, and a lower surface 40 connected with one another in sequence, a connecting line from the leading edge 10 to the trailing edge is a chord line 50, a ratio of a maximum thickness between the upper surface 20 and the lower surface 40 to a length of the chord line 50 is a relative thickness, each airfoil in the first airfoil family has a first relative thickness d1, and the first relative thickness d1 has the following range: 17.1%≤d1≤26.3%; each airfoil in the second airfoil family has a second relative thickness d2, and the second relative thickness d2 has the following range: 28.5%≤d2≤36.8%; each airfoil in the third airfoil family has a third relative thickness d3, and the third relative thickness d3 has the following range: 37.9% ≤d2≤63.0%; the ratio of the distance from the maximum thickness position of each airfoil to the leading edge 10 to the length of the chord line 50 ranges from 26.5% to 35.0%, that is, the range of the maximum thickness position of each airfoil is 0.265 to 0.350.

In specific implementation, the wind turbine blade airfoil family of the embodiments of the present application includes a first airfoil family, a second airfoil family and a third airfoil family. The three airfoil families are applicable to different parts of the blade respectively. The three airfoil families each include multiple airfoils. The first relative thickness d1 of each airfoil in the first airfoil family has a range of 17.1%≤d1≤26.3%, which is applicable to the outer area of the blade, that is, the blade tip of the blade; the second relative thickness d2 of each airfoil in the second airfoil family has a range of 28.5%≤d2≤36.8%, which is applicable to the middle part of the blade, that is, the part between the blade tip and the blade root of the blade; the third relative thickness d3 of each airfoil in the third airfoil family has a range of 37.9%≤d3≤63.0%, which is applicable to the inner area of the blade, that is, the blade root of the blade. For different areas of the blade, the first airfoil family, the second airfoil family and the third airfoil family of the embodiments of the present application have different relative thickness ranges, which are targeted in design and can be relatively independently set according to the overall shape of the blade, so that various parameters of the wind turbine blade are optimized. The ratio of the distance from the maximum thickness position of each airfoil to the leading edge 10 to the length of the chord line 50 ranges from 26.5% to 35.0%. Within this range, the maximum thickness positions of the airfoils each are close to the aerodynamic center, so that the wind turbine blade has a relatively high aeroelastic stability. On the other hand, the settings of the relative thickness range of each airfoil and the maximum thickness position range can affect the range of the airfoil laminar boundary, thereby having an important impact on the airfoil resistance level, maximum lift-to-drag ratio and other parameters.

Specifically, the first airfoil family includes three airfoils, and the first relative thicknesses d1 of the three airfoils are 18%, 21% and 25% respectively; the second airfoil family includes two airfoils, and the second relative thicknesses d2 of the two airfoils are 30% and 35% respectively; the third airfoil family includes three airfoils, and the third relative thicknesses d3 of the three airfoils are 40%, 50% and 60% respectively.

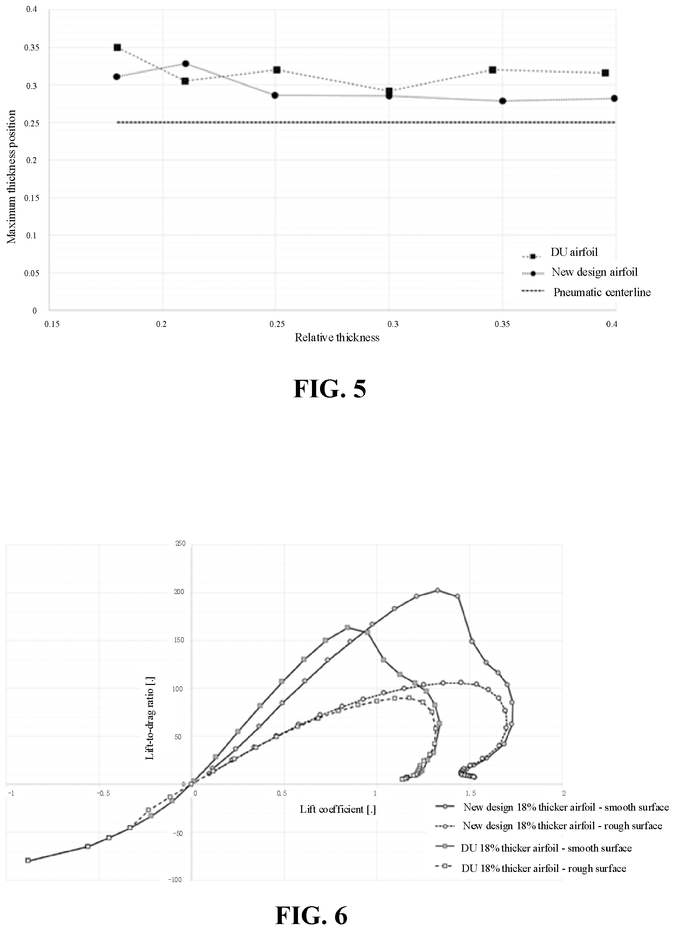

As shown in FIG. 5, FIG. 5 is a schematic diagram of the maximum thickness position comparison between a new airfoil and a reference airfoil provided in an embodiment of the present application. Compared with the airfoils with the same thicknesses in the general DU airfoil family, the first airfoil family and the second airfoil family in the embodiments of the present application, except for the airfoil with a relative thickness of 21%, the maximum thickness positions of the airfoils in the embodiments of the present application each are closer to the aerodynamic center line (i.e., the aerodynamic center position) of the airfoils, therefore, the airfoils in the airfoil family in the embodiments of the present application can improve the aeroelastic stability of large blades.

In the wind turbine blade airfoil family of the embodiments of the present application, in the first airfoil family, the ratio of the distance from the maximum thickness position of each airfoil to the leading edge 10 to the length of the chord line 50 ranges from 27.1% to 34.4%, that is, the range of the maximum thickness position of the airfoil is 0.271 to 0.344; in the second airfoil family, the ratio of the distance from the maximum thickness position of each airfoil to the leading edge 10 to the length of the chord line 50 ranges from 26.5% to 29.9%, that is, the range of the maximum thickness position of the airfoil is 0.265 to 0.299; in the third airfoil family, the ratio of the distance from the maximum thickness position of each airfoil to the leading edge 10 to the length of the chord line 50 ranges from 26.7% to 35.0%, that is, the range of the maximum thickness position of the airfoil is 0.267 to 0.350.

In specific implementation, since the first relative thickness d1, the second relative thickness d2 and the third relative thickness d3 are all different, the maximum thickness positions of the airfoils in the first airfoil family, the airfoils in the second airfoil family and the airfoils in the third airfoil family are also different for different relative thicknesses, so that each airfoil family can have a suitable maximum thickness position at different relative thicknesses, so that each thin airfoil in the first airfoil family has low resistance characteristics and high lift-to-drag ratio characteristics, which is conducive to enhancing the overall aerodynamic efficiency of the wind turbine blade.

In the wind turbine blade airfoil family of the embodiments of the present application, the airfoil has a maximum curvature, and the ratio of the maximum curvature of each airfoil to the length of the chord line 50 ranges from 1.83% to 4.57%. It should be noted that the ratio of the maximum curvature to the length of the chord line 50 is the relative curvature.

In the wind turbine blade airfoil family of the embodiments of the present application, in the first airfoil family, the ratio of the maximum curvature of each airfoil to the length of the chord line 50 ranges from 3.47% to 4.57%; in the second airfoil family, the ratio of the maximum curvature of each airfoil to the length of the chord line 50 ranges from 2.44% to 3.07%; in the third airfoil family, the ratio of the maximum curvature of each airfoil to the length of the chord line 50 ranges from 1.83% to 2.67%.

In specific implementation, the range setting of the maximum curvature in each airfoil family can affect the asymmetry of the airfoil flow. By adjusting and setting the appropriate curvature characteristics, the aerodynamic characteristics of the airfoil such as the design lift coefficient, maximum lift coefficient, critical stall angle of attack, and stall gentleness characteristic can be improved.

Specifically, the first airfoil family includes three airfoils, and the ratios of the maximum curvatures of the three airfoils to the length of the chord line 50 are 4.35%, 4.00% and 3.65% respectively; the second airfoil family includes two airfoils, and the ratios of the maximum curvatures of the two airfoils to the length of the chord line 50 are 2.92% and 2.57% respectively; the third airfoil family includes three airfoils, and the ratios of the maximum curvatures of the three airfoils to the length of the chord line 50 are 1.93%, 2.07% and 2.54% respectively.

In the wind turbine blade airfoil family of the embodiments of the present application, the ratio of the distance from the maximum curvature of each airfoil to the leading edge 10 to the length of the chord line 50 ranges from 42.9% to 84.5%.

In the wind turbine blade airfoil family of the embodiments of the present application, in the first airfoil family, the ratio of the distance from the maximum curvature position of each airfoil to the leading edge 10 to the length of the chord line 50 ranges from 42.9% to 78.4%, that is, the range of the maximum curvature position of the airfoil is 0.429 to 0.784; in the second airfoil family, the ratio of the distance from the maximum curvature position of each airfoil to the leading edge 10 to the length of the chord line 50 ranges from 74.2% to 82.8%, that is, the range of the maximum curvature position of the airfoil is 0.742 to 0.828; in the third airfoil family, the ratio of the distance from the maximum curvature position of each airfoil to the leading edge 10 to the length of the chord line 50 ranges from 75.1% to 84.5%, that is, the range of the maximum curvature position of the airfoil is 0.751 to 0.845.

In specific implementation, the setting range of the ratio between the distance from the maximum curvature position of the airfoil in each airfoil family to the leading edge 10 and the length of the chord line 50 can affect the asymmetry of the airfoil flow and the boundary layer separation characteristics. By setting a suitable maximum curvature position, the lift characteristics of the airfoil such as the design lift coefficient, maximum lift coefficient, critical stall angle of attack, and stall gentleness characteristic can also be improved, which is conducive to achieving low-cost and lightweight blade development requirements.

Specifically, the first airfoil family includes three airfoils, and the ratios of the distances from the maximum curvature positions of the three airfoils to the leading edge 10 to the length of the chord line 50 are 45.2%, 70.4% and 74.7% respectively; the second airfoil family includes two airfoils, and the ratios of the distances from the maximum curvature positions of the two airfoils to the leading edge 10 to the length of the chord line 50 are 78.9% and 78.1% respectively; the third airfoil family includes three airfoils, and the ratios of the distances from the maximum curvature positions of the three airfoils to the leading edge 10 to the length of the chord line 50 are 79.0%, 80.5% and 79.2% respectively.

In the wind turbine blade airfoil family of the embodiments of the present application, the ratio of the radius of the leading edge 10 to the length of the chord line 50 ranges from 1.7% to 26.7%.

In the wind turbine blade airfoil family of the embodiments of the present application, in the first airfoil family, the ratio of the radius of the leading edge 10 of each airfoil to the length of the chord line 50 ranges from 1.7% to 3.6%; in the second airfoil family, the ratio of the radius of the leading edge 10 of each airfoil to the length of the chord line 50 ranges from 6.7% to 8.9%; in the third airfoil family, the ratio of the radius of the leading edge 10 of each airfoil to the length of the chord line 50 ranges from 20.6% to 26.7%.

In specific implementation, the setting range of the ratio of the radius of the leading edge 10 of the airfoil in each airfoil family to the length of the chord line 50 can affect the laminar flow range or the leading edge transition position and the stall separation characteristics of the airfoil, thereby having an important impact on the leading edge roughness sensitivity, etc. By setting a suitable leading edge radius, the leading edge roughness sensitivity of the airfoil aerodynamic performance can be effectively reduced, and the aerodynamic adaptability of the wind turbine blade airfoil to complex environments can be improved.

Specifically, the first airfoil family includes three airfoils, and the ratios of the radii of the leading edges 10 of the three airfoils to the length of the chord line 50 are 1.8%, 2.4% and 3.4% respectively; the second airfoil family includes two airfoils, and the ratios of the radii of the leading edges 10 of the two airfoils to the length of the chord line 50 are 7.1% and 8.5% respectively; the third airfoil family includes three airfoils, and the ratios of the radii of the leading edges 10 of the three airfoils to the length of the chord line 50 are 13.8%, 21.7% and 25.4% respectively.

In the wind turbine blade airfoil family of the embodiments of the present application, the ratio of the thickness of the trailing edge 30 to the length of the chord line 50 ranges from 0.34% to 42.9%.

In the wind turbine blade airfoil family of the embodiments of the present application, in the first airfoil family, the ratio of the thickness of the trailing edge 30 of each airfoil to the length of the chord line 50 ranges from 0.34% to 0.42%; in the second airfoil family, the ratio of the thickness of the trailing edge 30 of each airfoil to the length of the chord line 50 ranges from 0.48% to 1.68%; in the third airfoil family, the ratio of the thickness of the trailing edge 30 of each airfoil to the length of the chord line 50 ranges from 17.91% to 42.9%.

In specific implementation, the setting range of the ratio of the thickness of the trailing edge 30 of the airfoil in each airfoil family to the length of the chord line 50 can affect the adverse pressure gradient and downwash effect of the airfoil boundary layer flow, thereby having an important impact on the lift coefficient, drag coefficient, critical stall angle of attack and roughness sensitivity. By setting a suitable trailing edge thickness, it is conducive to further improving the lift characteristics of the airfoil and reducing the leading edge roughness sensitivity, and further improving the aerodynamic adaptability of the wind turbine blade.

Specifically, the first airfoil family includes three airfoils, and the ratios of the thicknesses of the trailing edges 30 of the three airfoils to the length of the chord line 50 are 0.36%, 0.40% and 0.40% respectively; the second airfoil family includes two airfoils, and the ratios of the thicknesses of the trailing edges 30 of the two airfoils to the length of the chord line 50 are 0.50% and 1.60% respectively; the third airfoil family includes three airfoils, and the ratios of the thicknesses of the trailing edges 30 of the three airfoils to the length of the chord line 50 are 18.86%, 29.20% and 40.86% respectively.

In addition, the relative thickness, trailing edge thickness, leading edge radius, etc. of the airfoil have a decisive effect on the cross-sectional area, second-order section moment of inertia and other parameters of the airfoil. Appropriate parameter settings are conducive to improving the geometric structural properties of the airfoil, and improving the structural efficiency of the applied blades, thereby realizing the low-cost and lightweight development of the blades.

Therefore, in the three airfoil families of the wind turbine blade airfoil family of the present application, by improving the geometric shape characteristics of the airfoil, such as relative thickness, maximum thickness position, relative curvature, maximum curvature position, leading edge radius and trailing edge thickness, the aerodynamic-structural properties of the airfoil are improved, including core aerodynamic characteristic parameters such as design lift coefficient, maximum lift-to-drag ratio, critical stall angle of attack, maximum lift coefficient and low roughness sensitivity, as well as geometric structural characteristic parameters such as cross-sectional area, circumference, second-order moment of inertia, etc., which is conducive to achieving high performance, low cost, high aerodynamic adaptability and lightweight and other blade development requirements.

As shown in FIG. 2, FIG. 2 is a schematic diagram of geometric profiles of three outer thin airfoils of the first airfoil family provided in an embodiment of the present application.

Specifically, Table 1 shows the geometric characteristic parameters of the three airfoils in the first airfoil family, including six geometric characteristic parameters: relative thickness, maximum thickness position, relative curvature, maximum curvature position, leading edge radius and trailing edge thickness. The three airfoils are all suitable for the outer area of the blade, that is, the blade tip part of the blade.

**Table 1**

| Airfoil | Relative thickness | Maximum thickness position | Relative curvature | Maximum curvature position | Leading edge radius | Trailing edge thickness |
|---|---|---|---|---|---|---|
| 18% thickness airfoil | 0.180 | 0.311 | 4.35% | 0.452 | 0.018 | 0.36% |
| 21% thickness airfoil | 0.210 | 0.328 | 4.00% | 0.704 | 0.024 | 0.40% |
| 25% thickness airfoil | 0.250 | 0.286 | 3.65% | 0.747 | 0.034 | 0.40% |

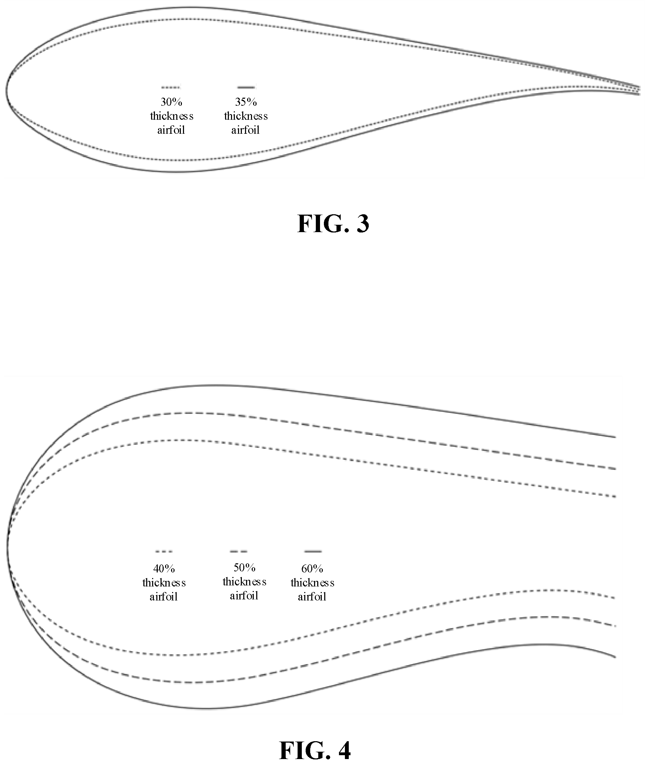

As shown in FIG. 3, FIG. 3 is a schematic diagram of geometric profiles of two blade middle thick airfoils of the second airfoil family provided in an embodiment of the present application.

Table 2 shows the geometric characteristic parameters of the two airfoils in the second airfoil family, including six geometric characteristic parameters: relative thickness, maximum thickness position, relative curvature, maximum curvature position, leading edge radius and trailing edge thickness. Both airfoils are suitable for the middle area of the blade, that is, the partial area between the blade tip and the blade root of the blade.

**Table 2**

| Airfoil | Relative thickness | Maximum thickness position | Relative curvature | Maximum curvature position | Leading edge radius | Trailing edge thickness |
|---|---|---|---|---|---|---|
| 30% thickness airfoil | 0.300 | 0.285 | 2.92% | 0.789 | 0.071 | 0.50% |
| 35% thickness airfoil | 0.350 | 0.279 | 2.57% | 0.781 | 0.085 | 1.60% |

As shown in FIG. 4, FIG. 4 is a schematic diagram of geometric profiles of three blade root large thickness airfoils of the third airfoil family provided in an embodiment of the present application.

Table 3 shows the geometric characteristic parameters of the three airfoils in the third airfoil family, including six geometric characteristic parameters: relative thickness, maximum thickness position, relative curvature, maximum curvature position, leading edge radius and trailing edge thickness. The three airfoils are all suitable for the inner area of the blade, i.e., the blade root of the blade.

**Table 3**

| Airfoil | Relative thickness | Maximum thickness position | Relative curvature | Maximum curvature position | Leading edge radius | Trailing edge thickness |
|---|---|---|---|---|---|---|
| 40% thickness airfoil | 0.399 | 0.282 | 1.93% | 0.790 | 0.138 | 18.86% |
| 50% thickness airfoil | 0.501 | 0.304 | 2.07% | 0.805 | 0.217 | 29.20% |
| 60% thickness airfoil | 0.600 | 0.333 | 2.54% | 0.792 | 0.254 | 40.86% |

As shown in Table 4, Table 4 shows the structural characteristic parameters of airfoils with 8 thicknesses in the embodiments of the present application and the structural parameter characteristics of 8 airfoils with the same thicknesses as the present application in the currently general DU airfoil family. The structural characteristic parameters include the area, circumference, second-order section moment skinIyy and second-order section moment skinIxx of the airfoil.

**Table 4**

| Airfoil family | Relative thickness | Trailing edge thickness | Area | Circum ference | Second-order section moment skinlyy | Second-order section moment skinIxx |
|---|---|---|---|---|---|---|
| Airfoil family of this scheme | 18% | 0.36% | 0.108 | 2.079 | 0.2004 | 0.0081 |
| | 21% | 0.40% | 0.122 | 2.093 | 0.2041 | 0.0103 |
| | 25% | 0.40% | 0.143 | 2.126 | 0.2134 | 0.0143 |
| | 30% | 0.50% | 0.171 | 2.167 | 0.2178 | 0.0204 |
| | 35% | 1.60% | 0.201 | 2.218 | 0.2239 | 0.0280 |
| | 40% | 18.86% | 0.291 | 2.412 | 0.2639 | 0.0477 |
| | 50% | 29.20% | 0.388 | 2.588 | 0.3032 | 0.0834 |
| | 60% | 40.86% | 0.483 | 2.766 | 0.3423 | 0.1293 |
| DU airfoil family | 18% | 0.00% | 0.114 | 2.060 | 0.1879 | 0.0083 |
| | 21% | 0.28% | 0.122 | 2.090 | 0.2048 | 0.0103 |
| | 25% | 0.65% | 0.148 | 2.122 | 0.2073 | 0.0150 |
| | 30% | 1.74% | 0.176 | 2.167 | 0.2130 | 0.0212 |
| | 35% | 1.00% | 0.213 | 2.213 | 0.2181 | 0.0305 |
| | 40% | 5.00% | 0.244 | 2.311 | 0.2409 | 0.0403 |
| | 50% | 10.00% | 0.321 | 2.449 | 0.2626 | 0.0671 |
| | 60% | 18.00% | 0.406 | 2.610 | 0.2943 | 0.1043 |

It can be concluded from Table 4 that in the first airfoil family, the contour circumferences of the three thin airfoils with relative thicknesses of 18%, 21%, and 25% are 2.079, 2.093, and 2.126 respectively; the cross-sectional areas are 0.108, 0.122, and 0.143 respectively; the section moments of inertia skinIyy are 0.2004, 0.2041, and 0.2134 respectively; and the section moments of inertia skinIxx are 0.0081, 0.0103, and 0.0143 respectively. In the second airfoil family, the contour circumferences of the two thick airfoils with relative thicknesses of 30% and 35% are 2.167 and 2.218 respectively; the cross-sectional areas are 0.171 and 0.201 respectively; the section moments of inertia skinIyy are 0.2178 and 0.2239 respectively; and the section moments of inertia skinIxx are 0.0204 and 0.0280 respectively. In the third airfoil family, the contour circumferences of the three blade root thick airfoils with relative thicknesses of 40%, 50% and 60% are 2.412, 2.588 and 2.766 respectively; the cross-sectional areas are 0.291, 0.388 and 0.483 respectively; the section moments of inertia skinlyy are 0.2639, 0.3032 and 0.3423 respectively; and the section moments of inertia skinIxx are 0.0477, 0.0834 and 0.1293 respectively.

Compared with DU airfoils of the same relative thicknesses, the structural characteristic parameters of the five airfoils in the first and second airfoil families of the embodiments of the present application are not much different from the structural characteristic parameters of the five airfoils with the same thicknesses in the DU airfoil family; while for the blade root area with relatively high structural property requirements, that is, the three airfoils in the third airfoil family in the embodiments of the present application, their structural characteristic parameters are greatly improved compared with the structural characteristic parameters of the three airfoils with the same thicknesses in the DU airfoil family, wherein the airfoil circumference is increased by about 5%; the cross-sectional area is increased by about 20%; the section moment of inertia skinIyy is increased by 9%~16%; the section moment of inertia skinIxx is increased by 18%~24%.

As shown in Table 5, Table 5 shows the relative aerodynamic characteristic parameters of airfoils with three thicknesses in the first airfoil family in the embodiments of the present application, as well as the relative aerodynamic parameter characteristics of three airfoils with the same thicknesses as the present application in the currently general DU airfoil family and RF high-lift airfoil family. The aerodynamic characteristic parameters in Table 5 include the design lift coefficient, maximum lift-to-drag ratio, stall point angle of attack, maximum lift coefficient, stall gentleness parameter, lift roughness sensitivity and roughness maximum lift.

**Table 5**

| Airfoil | Airfoil thickness | Design lift coefficient | Maximum lift-to-drag ratio | Stall point angle of attack | Maximum lift coefficient | Stall gentleness parameter | Lift roughness sensitivity | Roughness maximum lift |
|---|---|---|---|---|---|---|---|---|
| New airfoil family of this scheme | 18% | 1.33 | 202.3 | 11.0 | 1.73 | 118.1 | 1.81% | 1.70 |
| | 21% | 1.19 | 192.7 | 12.0 | 1.69 | 154.5 | 3.00% | 1.64 |
| | 25% | 1.48 | 180.5 | 13.0 | 1.82 | 401.0 | 12.84% | 1.59 |
| DU airfoil family | 18% | 0.84 | 163.22 | 12.0 | 1.34 | 29.46 | 1.62% | 1.32 |
| | 21% | 1.11 | 169.01 | 12.0 | 1.63 | 94.18 | 2.40% | 1.59 |
| | 25% | 1.09 | 155.81 | 12.0 | 1.54 | 75.90 | 4.74% | 1.46 |
| RF high-lift airfoil family | 18% | 1.59 | 201.09 | 13.0 | 1.93 | 783.44 | 3.39% | 1.87 |
| | 21% | 1.54 | 183.84 | 13.0 | 1.88 | 661.78 | 3.86% | 1.80 |
| | 25% | 1.58 | 169.48 | 14.0 | 1.81 | 922.95 | 4.62% | 1.73 |

It can be concluded from Table 5 that the design lift coefficients of the three airfoils with relative thicknesses of 18%, 21%, and 25% in the first airfoil family in the embodiments of the present application are 1.33, 1.19, and 1.48 respectively, which are 58%, 8%, and 36% higher than those of the DU airfoils with the same thicknesses; the maximum lift-to-drag ratios are 202.3, 192.7, and 180.5 respectively, which are 24%, 14%, and 16% higher than those of the DU airfoils with the same thicknesses; the critical stall angles of attack are 12°, 11°, and 11° respectively, which are equivalent to those of the DU airfoils with the same thicknesses; while greatly improving the design lift coefficients and the maximum lift-to-drag ratios, the maximum lift coefficients of the new airfoils are effectively limited (all less than 1.85), and have relatively gentle stall characteristics (compared with another series of reference airfoils RF characterized by a high lift coefficient, the stall gentleness parameters are lower). In terms of leading edge roughness sensitivity, the maximum lift coefficients are still relatively high under rough conditions, which are 1.70, 1.64, and 1.59 respectively; the maximum lift sensitivity parameters under rough conditions are 1.8%, 3.0%, and 12.8% respectively, which have low roughness sensitivity characteristics and meet the design specifications. Compared with the existing general-purpose airfoils, the airfoils in the first airfoil family of the embodiments of the present application have significant advantages in design lift coefficient and maximum lift-to-drag ratio under the conditions of maintaining a gentle stall characteristic and low roughness sensitivity. In specific implementation, the outer airfoil of the blade in the first airfoil family of the embodiments of the present application maintains a relatively low roughness sensitivity and a gentle stall characteristic, and the aerodynamic efficiency of the airfoil is improved by about 20%, and the design lift is improved by about 20%.

Refer to FIG. 6, FIG. 6 shows the comparison of the airfoils with a relative thickness of 18% for the smooth surface and the rough surface in the embodiments of the present application, and the airfoils with a relative thickness of 18% for the smooth surface and the rough surface in the DU airfoil family, showing the aerodynamic efficiency (lift-to-drag ratio)-load (lift coefficient) characteristic curves of 4 different airfoils. It can be seen that the airfoils in the first airfoil family of the embodiments of the present application have significant advantages over the general DU airfoils in design lift coefficient and maximum lift-to-drag ratio, and among the same airfoil, the airfoils with smooth surfaces also have advantages in terms of the design lift coefficient and maximum lift-to-drag ratio.

As shown in Table 6, Table 6 shows the relative aerodynamic characteristic parameters of airfoils with two thicknesses of the second airfoil family in the embodiments of the present application, as well as the relative aerodynamic parameter characteristics of two airfoils with the same thicknesses as the present application in the currently general DU airfoil family and FFA airfoil family. The aerodynamic characteristic parameters in Table 6 include design lift coefficient, maximum lift-to-drag ratio, stall point angle of attack, maximum lift coefficient, lift roughness sensitivity and roughness maximum lift.

**Table 6**

| Airfoil | Relative thickness | Design lift coefficient | Maximu m lift-to-drag ratio | Stall point angle of attack | Maximum lift coefficient | Lift roughness sensitivity | Roughness maximum lift |
|---|---|---|---|---|---|---|---|
| New airfoil family of this scheme | 30% | 1.63 | 175.4 | 15.0 | 1.99 | 27.28% | 1.45 |
| | 35% | 1.91 | 180.5 | 15.0 | 2.15 | 43.85% | 1.21 |
| DU airfoil family | 30% | 1.27 | 132.54 | 13.0 | 1.66 | 12.27% | 1.45 |
| | 35% | 1.33 | 126.80 | 12.0 | 1.55 | 71.12% | 0.81 |
| FFA airfoil family | 30% | 1.42 | 139.25 | 15.0 | 1.69 | 36.04% | 1.08 |

It can be concluded from Table 6 that the design lift coefficients of the two airfoils with relative thicknesses of 30% and 35% in the second airfoil family in the embodiments of the present application are 1.63 and 1.91 respectively, which are 28% and 44% higher than those of the DU airfoils with the same thicknesses; the maximum lift-to-drag ratios are 175.4 and 180.5 respectively, which are 32% and 42% higher than those of the DU airfoils with the same thicknesses; the critical stall angles of attack are 15° and 15° respectively, which are more than 2° higher than those of the DU airfoils with the same thicknesses; the lift sensitivity parameters are 27.28% and 43.85% respectively, which meet the airfoil design specifications. The airfoils of the second airfoil family in the embodiments of the present application have significant advantages over the existing general airfoils in terms of design lift coefficient, maximum lift-to-drag ratio, critical stall angle of attack, etc. In specific implementation, the aerodynamic efficiency of the blade middle thick airfoil of the second airfoil family in the embodiments of the present application is improved by more than 30%.

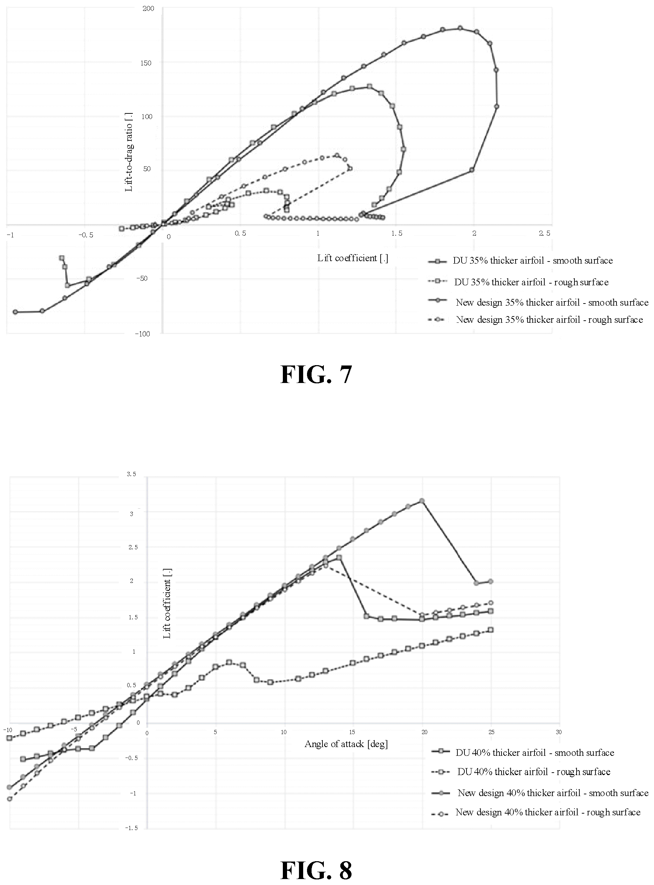

Refer to FIG. 7, FIG. 7 shows the airfoils with a relative thickness of 35% for the smooth surface and the rough surface in the embodiments of the present application, and the airfoils with a relative thickness of 35% for the smooth surface and the rough surface in the DU airfoil family, showing the aerodynamic efficiency (lift-to-drag ratio)-load (lift coefficient) characteristic curves of 4 different airfoils. It can be seen that the airfoils in the first airfoil family of the embodiments of the present application have significant advantages over the general DU airfoils in terms of the design lift coefficient and the maximum lift-to-drag ratio under the same roughness conditions, and among the same airfoil, the airfoils with smooth surfaces also have advantages in terms of the design lift coefficient and the maximum lift-to-drag ratio.

As shown in Table 7, Table 7 shows the relative aerodynamic characteristic parameters of the airfoils with three thicknesses in the third airfoil family in the embodiments of the present application, as well as the relative aerodynamic parameter characteristics of the three airfoils with the same thicknesses as the present application in the current general DU airfoil family. The aerodynamic characteristic parameters in Table 7 include the design stall point angle of attack, the maximum lift coefficient, the lift roughness sensitivity, the rough maximum lift and the rough stall angle of attack.

**Table 7**

| Airfoil | Relative thickness | Stall point angle of attack | Maximum lift coefficient | Lift roughness sensitivity | Rough maximum lift | Rough stall angle of attack |
|---|---|---|---|---|---|---|
| New airfoil family of this scheme | 40% | 20.0 | 3.15 | 29.07% | 2.23 | 13.0 |
| | 50% | 20.0 | 3.44 | 32.59% | 2.32 | 12.0 |
| | 60% | 20.0 | 3.88 | 30.21% | 2.71 | 12.0 |
| DU airfoil family | 40% | 14.0 | 2.35 | 63.70% | 0.85 | 6.0 |
| | 50% | 12.0 | 2.38 | 65.80% | 0.81 | 3.0 |
| | 60% | 10.0 | 2.29 | 57.19% | 0.98 | 2.0 |

It can be concluded from Table 7 that the maximum lift coefficients of the three airfoils with relative thicknesses of 40%, 50%, and 60% in the third airfoil family in the embodiments of the present application are 3.15, 3.44, and 3.88 respectively, which are 34%, 45%, and 69% higher than those of the DU airfoils with the same thicknesses; the critical stall angles of attack are 20°, 20°, and 20° respectively, which are more than 6° higher than those of the DU airfoils with the same thicknesses; the lift sensitivity parameters are 29.07%, 32.59%, and 30.21% respectively, which are much lower than the roughness sensitivity parameters of the DU airfoils with the same thicknesses. The three large-thickness airfoils in the embodiments of the present application have significant advantages over the DU airfoils in terms of critical stall angle of attack, maximum lift coefficient and low roughness sensitivity, while meeting the airfoil design specifications.

Refer to FIG. 8, FIG. 8 shows the comparison of the airfoils with a relative thickness of 40% for the smooth surface and the rough surface in the embodiments of the present application, and the airfoils with a relative thickness of 40% for the smooth surface and the rough surface in the DU airfoil family, showing the aerodynamic efficiency (lift-to-drag ratio)-load (lift coefficient) characteristic curves of 4 different airfoils. It can be seen that the airfoils in the first airfoil family of the embodiments of the present application have significant advantages over the general DU airfoils in term of design lift coefficient and maximum lift-to-drag ratio, and among the same airfoil, the airfoils with smooth surfaces also have advantages in term of the design lift coefficient and maximum lift-to-drag ratio.

As shown in Table 8, Table 8 shows that under the condition of a 120m-class blade, the original airfoil layout scheme that fully adopts the DU airfoils and the new airfoil layout scheme that partially adopts the airfoils in the airfoil family of the embodiments of the present application are compared in terms of clean surface power generation, rough surface power generation, blade root load and rough surface power generation loss.

**Table 8**

| | Original airfoil layout scheme | New airfoil layout scheme |
|---|---|---|
| Airfoil series | DU airfoil: 40%/35%/30%/25%/21%/18% | New blade root airfoil:40% |
| | | DU airfoil: 35%/30%/25%/21%/18% |
| Clean surface power generation | 48.58 GWh | 48.84 GWh |
| Rough surface power generation | 45.55 GWh | 47.71 GWh |
| Blade root load | 62805 kNm | 62623.8 kNm |
| Rough surface power generation loss | -6.20% | -2.30% |

It can be concluded from Table 8 that, compared with the original airfoil layout scheme, the new airfoil layout scheme adopts the airfoil with 40% thickness in the third airfoil family in the embodiments of the present application to replace the airfoil with 40% thickness in the DU airfoil family, thereby increasing the power generation of the blade (increased by 0.5%), and reducing the steady-state load of the blade root (reduced by 0.3%), while the roughness sensitivity of the blade is also reduced. Therefore, the airfoil family in the embodiments of the present application is effective in improving the performance of the blade.

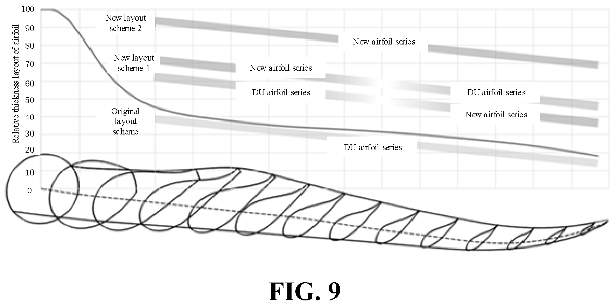

Based on the airfoils in the embodiments of the present application, there can be a variety of application layout schemes in terms of blade design, including partially applying to replace the existing airfoil family and completely adopting the new airfoil of the present embodiment for blade aerodynamic design layout, as shown in FIG. 9.

It should be noted that, in the present application, relational terms such as first and second, etc. are only used to distinguish one entity or operation from another entity or operation, and do not necessarily require or imply any such actual relationship or order between these entities or operations. Moreover, the terms "include", "comprises" or any other variants thereof are intended to cover non-exclusive inclusion, so that a process, method, article or device including a series of elements includes not only those elements, but also other elements not explicitly listed, or also includes elements inherent to such process, method, article or device. In the absence of further restrictions, the elements defined by the sentence "includes..." do not exclude the existence of other identical elements in the process, method, article or device including the elements.

The above are only specific implementation methods of the present application. It can be clearly understood by those skilled in the art that for the convenience and simplicity of description, the specific working process of the above-described system, module and unit can refer to the corresponding process in the aforementioned method embodiment, and will not be repeated here. It should be understood that the scope of protection of the present application is not limited to this. Any technician familiar with the technical field can easily think of various equivalent modifications or substitutions within the technical scope disclosed in the present application, and these modifications or substitutions should be included in the scope of protection of the present application.

## Claims

1. A wind turbine blade airfoil family, comprising a first airfoil family, a second airfoil family and a third airfoil family, the first airfoil family, the second airfoil family and the third airfoil family each comprising a plurality of airfoils, each of the airfoils comprising a leading edge (10), an upper surface (20), a trailing edge (30) and a lower surface (40) connected with one another in sequence, a connecting line from the leading edge (10) to the trailing edge being a chord line (50), a ratio of a maximum thickness between the upper surface (20) and the lower surface (40) to a length of the chord line (50) being a relative thickness, and each of the airfoils in the first airfoil family having a first relative thickness d1, the first relative thickness d1 having a following range: 17.1%≤d1 ≤26.3%; each of the airfoils in the second airfoil family having a second relative thickness d2, the second relative thickness d2 having a following range: 28.5% ≤d2≤36.8%; each of the airfoils in the third airfoil family having a third relative thickness d3, the third relative thickness d3 having a following range: 37.9%≤d2≤63.0%; a ratio of a distance from a maximum thickness position of each of the airfoils to the leading edge (10) to the length of the chord line (50) ranging from 26.5% to 35.0%.

2. The wind turbine blade airfoil family according to claim 1, wherein in the first airfoil family, the ratio of the distance from the maximum thickness position of each of the airfoils to the leading edge (10) to the length of the chord line (50) ranges from 27.1% to 34.4%; in the second airfoil family, the ratio of the distance from the maximum thickness position of each of the airfoils to the leading edge (10) to the length of the chord line (50) ranges from 26.5% to 29.9%; in the third airfoil family, the ratio of the distance from the maximum thickness position of each of the airfoils to the leading edge (10) to the length of the chord line (50) ranges from 26.7% to 35.0%.

3. The wind turbine blade airfoil family according to claim 1, wherein each of the airfoils has a maximum curvature, and a ratio of the maximum curvature of each of the airfoils to the length of the chord line (50) ranges from 1.83% to 4.57%.

4. The wind turbine blade airfoil family according to claim 3, wherein in the first airfoil family, the ratio of the maximum curvature of each of the airfoils to the length of the chord line (50) ranges from 3.47% to 4.57%; in the second airfoil family, the ratio of the maximum curvature of each of the airfoils to the length of the chord line (50) ranges from 2.44% to 3.07%; and in the third airfoil family, the ratio of the maximum curvature of each of the airfoils to the length of the chord line (50) ranges from 1.83% to 2.67%.

5. The wind turbine blade airfoil family according to claim 1, wherein a ratio of a distance from a maximum curvature position of each of the airfoils to the leading edge (10) to the length of the chord line (50) ranges from 42.9% to 84.5%.

6. The wind turbine blade airfoil family according to claim 5, wherein in the first airfoil family, the ratio of the distance from the maximum curvature position of each of the airfoils to the leading edge (10) to the length of the chord line (50) ranges from 42.9% to 78.4%; in the second airfoil family, the ratio of the distance from the maximum curvature position of each of the airfoils to the leading edge (10) to the length of the chord line (50) ranges from 74.2% to 82.8%; in the third airfoil family, the ratio of the distance from the maximum curvature position of each of the airfoils to the leading edge (10) to the length of the chord line (50) ranges from 75.1% to 84.5%.

7. The wind turbine blade airfoil family according to claim 1, wherein a ratio of a radius of the leading edge (10) to the length of the chord line (50) ranges from 1.7% to 26.7%.

8. The wind turbine blade airfoil family according to claim 7, wherein in the first airfoil family, the ratio of the radius of the leading edge (10) of each of the airfoils to the length of the chord line (50) ranges from 1.7% to 3.6%; in the second airfoil family, the ratio of the radius of the leading edge (10) of each of the airfoils to the length of the chord line (50) ranges from 6.7% to 8.9%; in the third airfoil family, the ratio of the radius of the leading edge (10) of each of the airfoils to the length of the chord line (50) ranges from 20.6% to 26.7%.

9. The wind turbine blade airfoil family according to claim 1, wherein a ratio of a thickness of the trailing edge (30) to the length of the chord line (50) ranges from 0.34% to 42.9%.

10. The wind turbine blade airfoil family according to claim 9, wherein in the first airfoil family, the ratio of the thickness of the trailing edge (30) of each of the airfoils to the length of the chord line (50) ranges from 0.34% to 0.42%; in the second airfoil family, the ratio of the thickness of the trailing edge (30) of each of the airfoils to the length of the chord line (50) ranges from 0.48% to 1.68%; and in the third airfoil family, the ratio of the thickness of the trailing edge (30) of each of the airfoils to the length of the chord line (50) ranges from 17.91% to 42.9%.
